# EUROPEAN PATENT APPLICATION

(11) **EP 1 213 903 A2**
(43) Date of publication of application: **12.06.2002**
(21) Application number: 01310209.0
(22) Date of filing: 06.12.2001
(51) Int. Cl.: H04M 3/493, H04M 3/487

(54) **Line access control apparatus and line access system**

(30) Priority: 06.12.2000 JP 2000371435
(71) Applicant: NEC CORPORATION, Tokyo (JP)
(72) Inventor: Ishida, Keijiro, c/o Nec Corporation, Tokyo (JP)
(74) Representative: Moir, Michael Christopher

(57) **Abstract**

A line control apparatus includes an incoming-call detection circuit, announcement circuit, PB receiver, and switch. The incoming-call detection circuit detects an incoming call made to an interactive voice response apparatus or network. When the incoming call detection circuit detects the incoming call, the announcement circuit sends a voice request that a caller respond with a specific signal. The PB receiver discriminates whether the specific signal is received from the caller in response to the request from the announcement circuit. The switch connects the incoming call to the interactive voice response apparatus or network in accordance with a discrimination result from the PB receiver. A line access system is also disclosed.

## Description

### Background of the Invention

The present invention relates to a line access control apparatus and access server using a telephone line and, more particularly, to a line access control apparatus and line access system which selectively connect a telephone set or a computer to a telephone line to access the line.

The opportunity to access the Internet or use e-mail at home is increasing. To do this, generally, using a modem or terminal adapter, a computer is connected to a telephone line as needed, and otherwise, a telephone set is connected to the telephone line. Such a technique of connecting a computer to a telephone line as needed is called dialup connection.

Recently, IVR (Interactive Voice Response) apparatuses for causing a called party to automatically respond to various kinds of inquiries by computer voice are proliferating. With the IVR, automatic response using computers can be applied to responses that require no complex procedures, e.g., to provide various kinds of information or to receive material requests or applications for prize competitions. As a result, the reception time can be prolonged, or labor costs can be reduced.

In services using the IVR or content services using the Internet, service-providing sides use a unique telephone number and telephone line for each of different services. This is because these services assume an operatorless response to a user and cause the user side to select a line corresponding to a service to be used.

Currently, many companies and individuals have homepages. Of these homepage owners, mainly companies and public bodies widely provide response services using interactive voice response apparatuses. Under these circumstances, it is very disadvantageous to assign separate telephone numbers and telephone lines to two or more different services from the viewpoint of efficient and economical utilization of telephone lines.

### Summary of the Invention

It is an object of the preferred embodiments of the present invention to provide a line access control apparatus and line access system which can share a line to be used when a user connects to the Internet and IVR.

According to the present invention, there is provided a line control apparatus which receives a call to an interactive voice response apparatus and automatic calling to a network and controls line access, comprising incoming call detection means for detecting an incoming call made to the interactive voice response apparatus or network, request means for, when the incoming call detection means detects the incoming call, requesting, by voice, sending of a specific signal of a caller, discrimination means for discriminating whether the specific signal is received from the caller in response to the request from the request means, and switching connection means for connecting the incoming call to one of the interactive voice response apparatus and network in accordance with a discrimination result from the discrimination means.

### Brief Description of the Drawings

Preferred features of the present invention will now be described, by way of example only, with reference to the accompanying drawings, in which:-
Fig. 1 is a block diagram showing the main part of a line access system according to an embodiment of the present invention;
Fig. 2 is a flowchart showing the control operation of a CPU shown in Fig. 1; and,
Figs. 3A to 3D are views showing the switched state of a switch shown in Fig. 1.

### Description of the Preferred Embodiment

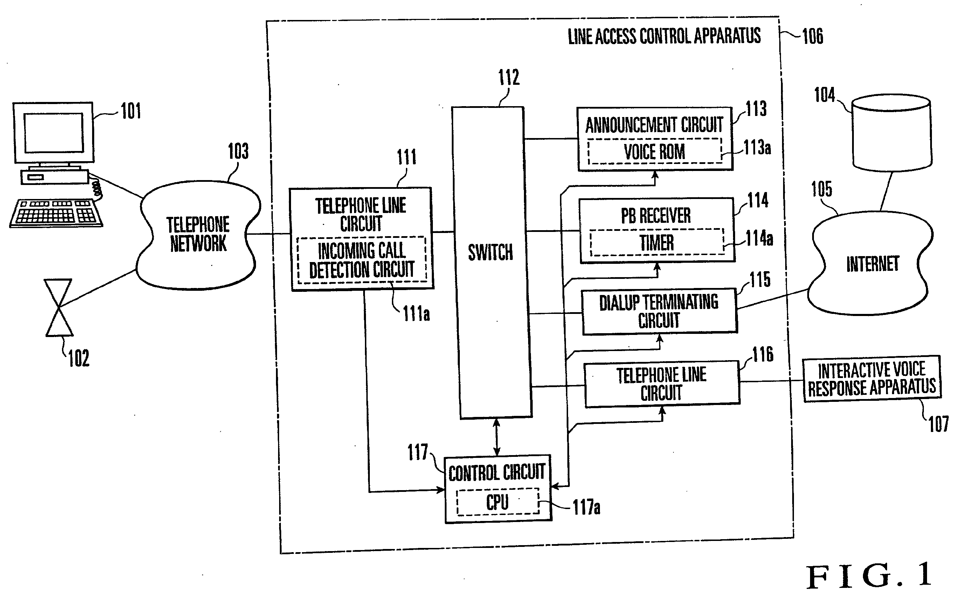

Fig. 1 shows the main part of a line access system according to an embodiment of the present invention. In the line access system shown in Fig. 1, a personal computer 101 and push-phone 102 on the user side are connected to a telephone network 103. A content server 104 which stores contents such as homepages is connected to the Internet 105. A line access control apparatus 106 is connected between the telephone network 103 and the Internet 105. An interactive voice response apparatus 107 for realizing automatic voice response is connected to the line access control apparatus 106.

The line access control apparatus 106 comprises a telephone line circuit 111 connected to the telephone network 103 to perform originating and terminating operations, a switch 112 for executing switching connection of the telephone line circuit 111, and an announcement circuit 113, PB receiver 114, dialup terminating circuit 115, and telephone line circuit 116, which are connected to the switch 112 as connection destinations of the telephone line circuit 111. These components are controlled by a control circuit 117 having a CPU (Central Processing Unit) 117a, a ROM (Read Only Memory) which stores a control program, and a RAM (Random Access Memory) serving as a working memory. The telephone line circuit 111 has an incoming call detection circuit 111a to output an incoming call detection signal to the control circuit 117.

The announcement circuit 113 has a ROM 113a to be used for voice generation and outputs predetermined voice information. The PB receiver 114 receives a PB signal (Multi Frequency signal) sent by pressing push buttons of the telephone set 102. The PB receiver 114 has a timer 114a for counting the PB signal reception time. The dialup terminating circuit 115 connects the dialup-connected personal computer 101 to the Internet 105. The telephone line circuit 116 connects the telephone set 102 to the interactive voice response apparatus 107 through the telephone network 103, telephone line circuit 111, and switch 112.

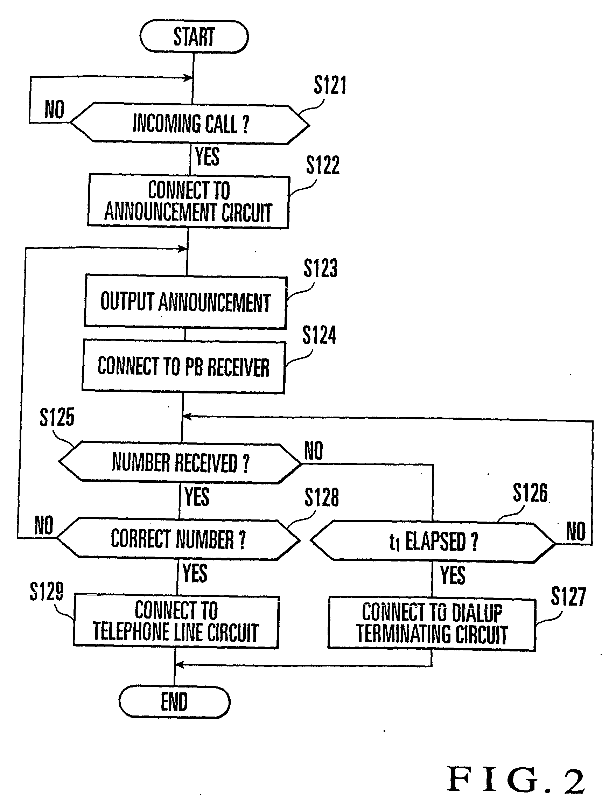

Fig. 2 shows the control operation of the CPU 117a in the control circuit 117.

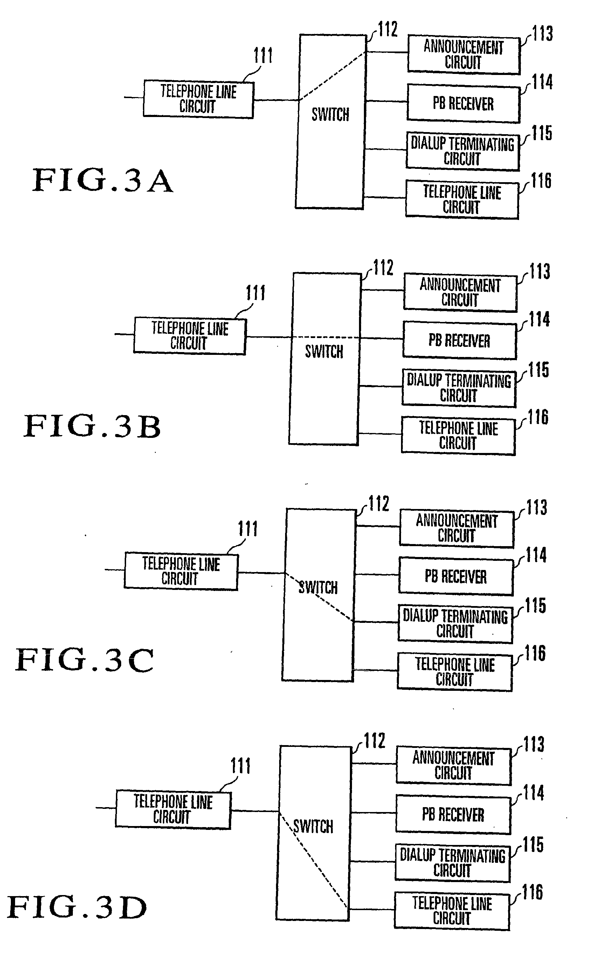

Control by the CPU 117a is done by executing the program stored in the ROM (not shown). The CPU 117a monitors in accordance with the output from the incoming call detection circuit 111a whether a call has received through the telephone network 103 (step S121). When call reception is detected, the CPU 117a controls the switch 112 to connect the telephone line circuit 111 to the announcement circuit 113, as shown in Fig. 3A (step S122).

After connection, the CPU 117a controls the announcement circuit 113 to output an announcement for requesting press on the push button of a specific number to the telephone set 102 as the caller (step S123). For example, an announcement "if you want interactive voice response, please press push button "1"" is output. Next, to receive a PB signal from the telephone set 102 in accordance with press on the push button, the CPU 117a controls the switch 112 to switch the connection destination of the telephone line circuit 111 to the PB receiver 114, as shown in Fig. 3B (step S124).

In this state, the CPU 117a monitors for a time t₁ counted by the timer 114a whether the PB receiver 114 has received a specific PB signal (steps S125 and S126). The timer 114a starts after the output of the announcement or after the switch 112 is switched to the PB receiver 114. If no PB signal has been received, or the time t₁ has elapsed without receiving any response in step S126, the CPU 117a controls the switch 112 to connect the telephone line circuit 111 to the dialup terminating circuit 115, as shown in Fig. 3C (step S127). Note that the time t₁ is set to, e.g., 5 sec.

When the personal computer 101 is accessing the content server 104 on the Internet 105, the announcement from the announcement circuit 113 is not recognized. Hence, if no response by a PB signal is received within the time t₁, it is determined that the call is made from the personal computer 101, and the telephone line circuit 111 is switched to the dialup terminating circuit 115. When the telephone line circuit 111 is connected to the dialup terminating circuit 115 through the switch 112, the personal computer 101 is connected to the Internet 105 through these paths, so the computer can be connected to the content server 104.

On the other hand, if a PB signal is received in step S125, the PB receiver 114 checks whether the received PB signal indicates a specific correct number (step S128). If NO in step S128, the CPU 117a controls the switch 112 to connect the telephone line circuit 111 to the announcement circuit 113, as shown in Fig. 3A, to request input of the correct number again by voice.

If YES in step S128, the CPU 117a controls the switch 112 to switch the connection destination of the telephone line circuit 111 to the telephone line circuit 116, as shown in Fig. 3D (step S129). That the PB signal by push button operation is received means that the operator on the terminal side has listened to the announcement. In this case, the originating terminal is estimated to be the telephone set 102. Hence, the connection destination of the telephone line circuit 111 is switched to the telephone line circuit 116 to connect the telephone set 102 to the interactive voice response apparatus 107.

In the above embodiment, the line access control apparatus 106 is connected to the personal computer 101 and telephone set 102 through a single telephone line. However, a plurality of lines may be assigned to a plurality of pairs of personal computers 101 and telephone sets 102.

In the above embodiment, access to the Internet 105 has been described. However, the present invention can also be applied to access to another network to obtain information. The apparatus to be dialup-connected to the telephone network 103 is not limited to the personal computer, and various kinds of information processing apparatuses can be used. In addition, instead of the telephone set 102, any other terminal having a telephone function can be used.

In the above embodiment, the PB receiver 114 discriminates reception of a specific PB signal. However, the PB receiver 114 may only receive the PB signal and output the reception information to the CPU 117a. In this case, the CPU 117a discriminates whether specific PB signal information has been received from pieces of reception information. The timer 114a may be prepared not in the PB receiver 114 but in the CPU 117a.

As has been described above, according to the present invention, both a call to the interactive voice response apparatus and automatic calling to the network are commonly received, and each call reception is detected. Since a line can be shared for both calls, the line utilization efficiency can be increased, and an economical communication system can be implemented. In other words, the system can cope with different requirements from a common line.

In addition, since a specific PB signal is received within the count time of the timer, the presence/absence of return of the specific signals can be discriminated by a simple circuit.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features. Reference numerals appearing in the claims are by way of illustration only and should be disregarded when interpreting the scope of the claims.

The text of the abstract filed herewith is repeated here as part of the specification.

A line control apparatus includes an incoming-call detection circuit, announcement circuit, PB receiver, and switch. The incoming-call detection circuit detects an incoming call made to an interactive voice response apparatus or network. When the incoming call detection circuit detects the incoming call, the announcement circuit sends a voice request that a caller respond with a specific signal. The PB receiver discriminates whether the specific signal is received from the caller in response to the request from the announcement circuit. The switch connects the incoming call to the interactive voice response apparatus or network in accordance with a discrimination result from the PB receiver. A line access system is also disclosed.

## Claims

1. A line control apparatus for directing a received call to an interactive voice response apparatus or to a network, the apparatus comprising:
incoming-call detection means (111a) for detecting an incoming call;
request means (113) for, when said incoming-call detection means detects the incoming call, sending to the caller a voice request asking the caller to send a specific signal;
discrimination means (114) for discriminating whether the specific signal is received from the caller in response to the request from said request means; and,
switching connection means (112) for connecting the incoming call to either the interactive voice response apparatus or the network in accordance with a discrimination result from said discrimination means.

2. An apparatus according to claim 1, wherein when the specific signal is received, said switching connection means connects the incoming call to the interactive voice response apparatus, and when the specific signal is not received, said switching connection means connects the incoming call to the network.

3. An apparatus according to claim 1, wherein:
said request means comprises an announcement circuit for, when the incoming call is detected, forwarding to the caller a voice request for the caller to press on a specific dial key; and,
said discrimination means comprises a push-button discrimination receiver for outputting, upon receiving a push-button signal based on the specific dial key pressed, a reception discrimination signal associated with the specific dial key.

4. An apparatus according to claim 1, wherein:
said apparatus further comprises a timer (114a) for counting time from request of the specific signal by said request means; and,
said discrimination means executes specific signal reception discrimination operation only during the count time of said timer.

5. An apparatus according to claim 1, further comprising control means (117) for controlling switching operation of said switching connection means in accordance with an output from said discrimination means.

6. A line access system comprising:
a telephone set connected to a telephone line;
a computer having Internet browsing software installed and connectable to the telephone line by a dialup function;
an interactive voice response apparatus for automatically responding by voice; and,
a line access control apparatus connected to said telephone set and computer through the telephone line;
said line access control apparatus comprising:
incoming-call detection means (111a) for detecting an incoming call made to the interactive voice response apparatus or network;
request means (113) for, when said incoming-call detection means detects the incoming call, forwarding to the caller a voice request asking the caller to send a specific signal;
discrimination means (114, 117) for discriminating whether the specific signal is received from the caller in response to the request from said request means; and,
switching connection means (112) for connecting the incoming call to either the interactive voice response apparatus or the network in accordance with a discrimination result from said discrimination means.

7. A system according to claim 6, wherein when the specific signal is received, said switching connection connects the incoming call to the interactive voice response apparatus, and when the specific signal is not received, said switching connection means connects the incoming call to the network.

8. A system according to claim 6, wherein:
said request means comprises an announcement circuit for, when the incoming call is detected, forwarding to the caller a voice request for the caller to press on a specific dial key; and,
said discrimination means comprises a push-button discrimination receiver for outputting, upon receiving a push-button signal based on the specific dial key pressed, a reception discrimination signal associated with the specific dial key.

9. A system according to claim 6, wherein:
said line access control apparatus further comprises a timer (114a) for counting time from request of the specific signal by said request means; and,
said discrimination means executes specific signal reception discrimination operation only during the count time of said timer.

10. A system according to claim 6, wherein said line access control apparatus further comprises control means (117) for controlling switching operation of said switching connection means in accordance with an output from said discrimination means.
